Europäisches Patentamt

European Patent Office

Office européen des brevets

(19)

(11) Numéro de publication : **0 517 614 A1**

## (12) DEMANDE DE BREVET EUROPEEN

(21) Numéro de dépôt : **92401574.6**

(22) Date de dépôt : **05.06.92**

(51) Int. Cl.$^5$ : **B29C 45/14,** A47C 7/16, A47C 5/02

(30) Priorité : **07.06.91 FR 9106968**

(43) Date de publication de la demande :
**09.12.92 Bulletin 92/50**

(84) Etats contractants désignés :
**BE DE ES FR GB GR IT LU PT SE**

(71) Demandeur : **ALLIBERT S.A.**
**129, avenue Léon Blum**
**F-38100 Grenoble (FR)**

(72) Inventeur : **Joulier, Ange**
**Les Mazuers, Saint Honoré**
**F-38350 La Mure (FR)**

(74) Mandataire : **Sabatier, Marc**
**83, Avenue Foch**
**F-75116 Paris (FR)**

(54) **Procédé de moulage d'un objet destiné notamment à un usage en extérieur comportant un matériau d'habillage rapporté par inclusion et objet ainsi obtenu.**

(57) L'invention a pour but un procédé d'obtention d'un tel objet caractérisé en ce que le matériau d'habillage présente des zones incluses (3 A) et des zones non incluses libres (11). Le matériau d'habillage est un produit synthétique formant une trame aérée dont les mailles sont constituées de fibres de nature à fusionner superficiellement avec une matière thermoplastique d'un objet moulé 4 à réaliser, et constituant également un élément de décor.

FIG. 5

La présente invention concerne un procédé de moulage par injection pour l'obtention d'objets en matière thermoplastique notamment destinés à un usage en extérieur, recouvert au moins partiellement d'un matériau d'habillage à effet décoratif, inclus dans la matière en cours de moulage.

Dans le cas d'applications particulières destinées à un usage externe, donc soumis aux intempéries le matériau d'habillage même inclus dans la matière de l'objet, ne pourra être quelconque, car il devra au moins être imperméable en soi, ou bien protégé.

De plus dans le cas des sièges d'extérieur, qu'il s'agisse de sièges destinés au jardin, aux terrasses de café ou bien encore aux télésièges dans les stations de sports d'hiver, il est nécessaires d'aérer ces sièges tout au moins au niveau de l'assise, de manière à éviter une sudation excessive de l'utilisateur due au contact direct de sa peau sur la matière plastique ou bien éviter la formation d'une poche d'eau sur le siège après une averse par exemple.

Pour remédier à ce type d'inconvénient il est connu de pratiquer des perforations sur les parties de sièges concernées mais cela n'est pas d'une esthétique certaine ou tout au moins ne permet pas de diversifier le style pour contribuer à un environnement agréable, en autorisant des tendances nouvelles.

La présente invention a pour but de remédier à ces différents inconvénients tout en permettant de personnaliser l'objet considéré selon un effet décoratif certain.

A cet effet l'invention concerne un procédé de moulage par injection pour l'obtention d'objets en matière thermoplastique notamment destinés à un usage en extérieur recouvert au moins partiellement d'un matériau d'habillage à effet décoratif, inclus dans la matière en cours de moulage, caractérisé en ce que le matériau d'habillage est un produit synthétique formant une trame aérée dont les mailles sont constituées de fibres ayant un point de fusion inférieur à celui de la matière thermoplastique à mouler, de manière telle à ce que lors de l'injection de celle-ci sur le matériau d'habillage, sa température soit apte à provoquer un ramollissement superficiel des fibres pour permettre leur inclusion sans détérioration, dans la matière thermoplastique de l'objet à réaliser.

Selon une autre caractéristique de l'invention il est prévu de ménager dans les moules des zones non accessibles à la matière thermoplastique lors de son injection, de manière à ce que les dites zones soient exclusivement constituées des parties libres de matériau d'habillage, obtenues alternativement en prolongement des parties incluses, pour constituer un objet à la fois décoratif et rigide, de structure aérée.

De cette manière on comprend aisément que l'invention trouve non seulement son application dans les sièges d'extérieur en général, grâce à la structure aérée ainsi obtenue, mais également dans la réalisation de parois verticales telles que claustras, paravents

etc... offrant ainsi une protection au vent et à la vue tout en permettant à la fois une résistance moindre au vent, susceptible de les renverser en extérieur, et un passage de la lumière.

Un autre avantage de l'invention réside dans le fait de pouvoir réaliser des inserts amovibles tels à pouvoir autoriser la création de décors différents à partir d'une structure ou d'une ossature standard : L'invention peut aussi trouver son application aux tables, pour constituer un ensemble décoratif.

D'autres caractéristiques apparaitront au cours de la description qui va suivre, donnée à titre d'exemple, et effectuée en regard des dessins annexés sur lesquels :

- Les figures 1 et 2 sont des représentations schématiques des étapes successives du procédé selon l'invention pour l'obtention d'un insert respectivement avant et après injection.

- La figure 3 est une vue agrandie d'un matériau d'habillage mis en oeuvre selon le procédé des figures 1 et 2.

- La figure 4 est une vue en coupe selon la ligne IV IV de la figure 3.

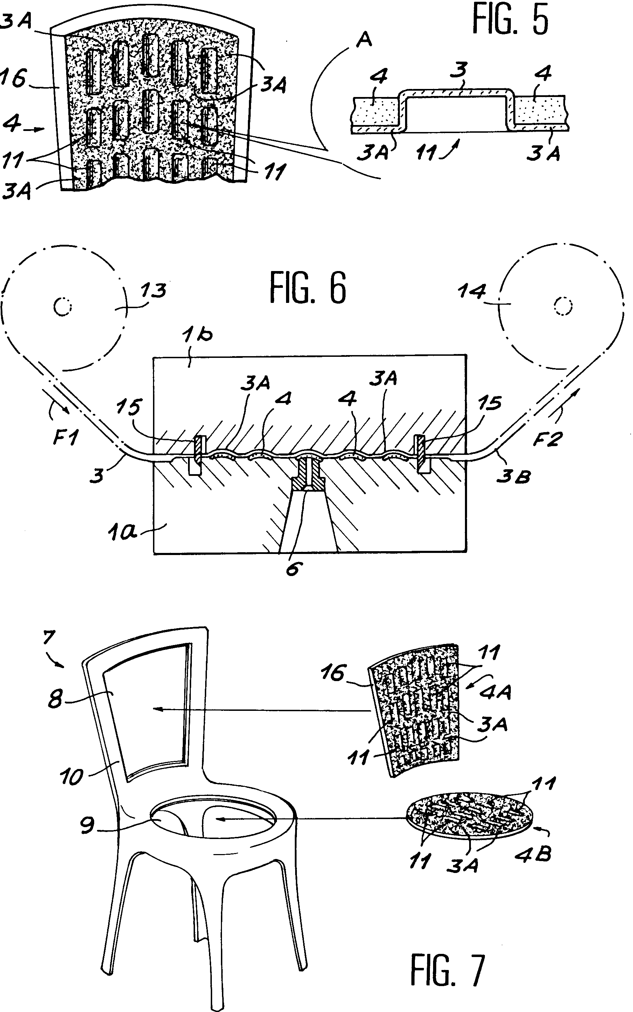

- La figure 5 est une vue frontale partielle d'un dossier de chaise selon un exemple de réalisation avec un détail A, constituant un agrandissement.

- La figure 6 est une vue en coupe d'un moule et de son dispositif d'alimentation d'un matériau d'habillage.

- La figure 7 est une vue en perspective éclatée d'un siège en cours de montage des inserts.

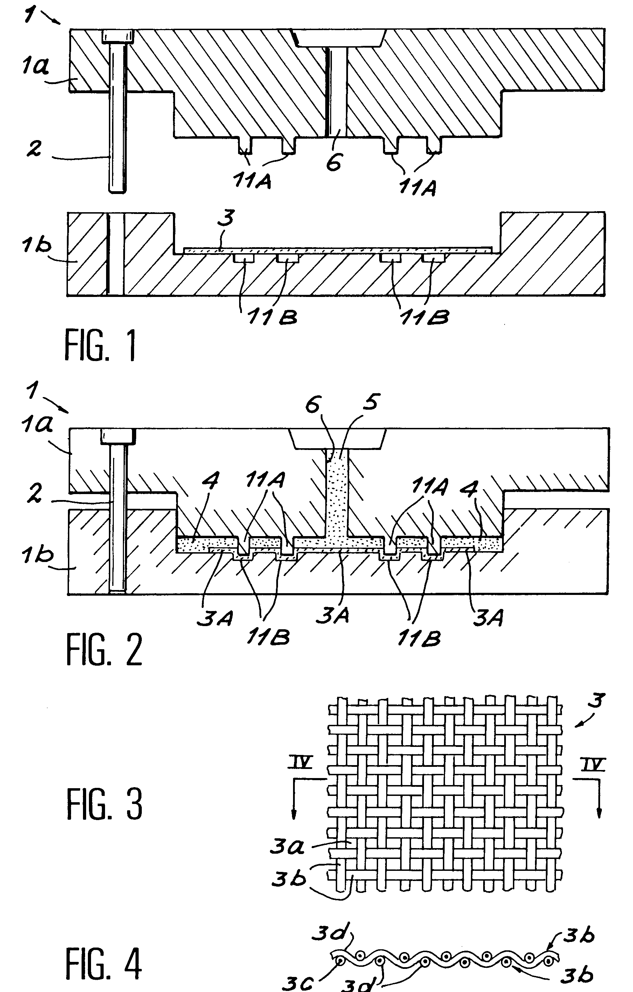

Le moule 1 désigné dans son ensemble sur les figures 1 et 2 est constitué de deux parties 1 a (poinçon), 1 b (matrice) fermées par des goujons 2 de manière connue en soi qui ne sera pas decrit ici.

Avant la fermeture du moule 1 on procède à la mise en place d'un matériau d'habillage 3 d'un objet à mouler (4) dans le fond de la partie inférieure 1 b du moule 1 (figure 1).

Ce matériau 3 est un produit synthétique formant une trame aérée (figure 3) dont les mailles 3 a sont constituées de fibres 3 b dont l'âme 3 c est un polyester enrobé de polychlorure de vinyle 3 d (figure 4).

Ce matériau 3 a un point de fusion inférieur à celui d'une matière thermoplastique 5 à injecter ultérieurement dans le moule 1 par un canal d'injection 6.

De cette manière lors de l'injection précitée sur la matériau d'habillage 3, la température du matériau thermoplastique 5 est en mesure de provoquer le ramollissement voire la fusion superficielle de l'enrobage 3 d en polychlorure de vinyle des fibres 3 b, pour permettre une migration réciproque des matières en présence et permettre l'inclusion sans détérioration de l'âme polyester 3 c des fibres 3 b, dans la matière thermoplastique 5 de l'objet à réaliser (4).

Après la fermeture du moule 1 (figure 2) on découpe à l'intérieur même de la matrice 1 b de celui-ci, le matériau d'habillage 3 et on le met en tension par ses extrémités. Comme le montre également la figure 2, lorsque le poinçon 1 a est en place, on injecte la matière thermoplastique 5 contre le matériau d'habillage 3 pour provoquer l'inclusion superficielle de celui-ci, dans la dite matière 5 de l'objet 4. On fait ensuite reculer mécaniquement à l'aide de vérins, le poinçon 1 a, ce qui provoque l'ouverture du moule 1 et l'éjection successive de l'objet 4.

En l'occurence l'objet 4 constitue un insert 4A, 4B destiné à former un dossier ou une assise d'une chaise 7 comportant des zones vides correspondantes 8, 9, respectivement obtenues dans une structure 10 obtenue au cours d'une même opération de moulage de matière plastique.

Dans le présent cas de figure, le poinçon 1 a détermine avec la matrice 1 b des zones non accessibles 11 à la matière thermoplastique 5 lors de son injection , grâce à des parties 11 A mâles du poinçon 1 a venant se loger dans des parties femelles 11 B de la matrice 1 b en entrainant entre elles le matériau d'habillage 3, qui de ce fait ne seront pas recouvertes de matière thermoplastique 5. Ainsi les zones 11 sont exclusivement constituées de parties libres de matériau d'habillage 3, obtenues alternativement en prolongement des parties incluses 3 A pour constituer à la fois un objet 4 décoratif et rigide, de structure aérée, grâce à la structure en mailles du matériau 3 laissé libre dans les zones 11.

Avantageusement, pour une meilleure rentabilité de l'installation, le matériau d'habillage 3 est conditionné en rouleau à partir d'une bobine distributrice 13 se déroulant pas à pas dans le sens F1 entre le poinçon 1 a et la matrice 1 b, au moment de l'ouverture du moule 1, entre chaque cycle de fabrication d'un insert 4A, 4B. L'entrainement de la bande de matériau 3 s'effectue selon F2, par enroulement de la partie découpée 3B constituant une chute sur une seconde bobine enrouleuse motrice 14.

Pendant l'opération de moulage la bande de matériau 3 est maintenue tendue par des aiguilles de maintien latéral 15. Il est également à noter que le cadre 16 entourant les inserts 4A, 4B comporte des moyens d'ancrage (non représentés) obtenus de moulage et coopérant avec des moyens correspondants (non représentés) prévus sur une feuillure des zones vides 8, 9.

## Revendications

**1)** Procédé de moulage par injection pour l'obtention d'objets en matière thermoplastique notamment destinés à un usage en extérieur, recouvert au moins partiellement d'un matériau d'habillage à effet décoratif inclus dans la matière en cours de moulage, par l'intermédiaire d'un poinçon et d'une matrice correspondante caractérisé en ce que le poinçon (1 a) détermine avec la matrice (1 b) des zones non accessibles (11) à la matière thermoplastique (5) lors de son injection, de manière à ce que les-dites zones soient exclusivement constituées des parties libres de matériau d'habillage (3) obtenus alternativement en prolongement des parties incluses (3 A), pour constituer un objet (4) à la fois décoratif et rigide, de structure aérée.

**2)** Procédé de moulage selon l'une des revendications précédentes caractérisé en ce que le matériau d'habillage (3) en fibres synthétiques est conditionné en rouleau et déroulé pas à pas entre les deux parties du moule ouvert (1) formant poinçon (1 a) et matrice (1 b), entre chaque cycle de fabrication d'un objet (4), l'entrainement de la bande (3) s'effectuant par enroulement de la partie découpée (3 B), constituant une chute sur une bobine enrouleuse motrice (14).

**3)** Procédé de moulage selon l'une des revendications précédentes caractérisé en ce que le matériau d'habillage est constitué par une trame de fibres de polyester (3 c) enrobées de polychlorure de vinyle (3 d).

**4)** Siège (7) caractérisé en ce qu'il est réalisé à partir d'une structure (10) dans laquelle ont été menagées des zones vides (8,9) aptes à recevoir des inserts (4 A, 4 B) constituant une assise ou un dossier obtenus par la mise en oeuvre du procédé selon l'une des revendications précédentes.

**5)** Siège selon la revendication 4 caractérisé en ce que sa structure (10) est obtenue par moulage de matière plastique au cours d'une même opération et comporte des moyens d'ancrage des inserts (4 A, 4 B) de manière à les rendre amovibles, pour l'obtention de décors différents à partir d'une structure (10) de siège (7) standard.

FIG. 1

FIG. 2

FIG. 3

FIG. 4

4

FIG. 5

FIG. 6

FIG. 7

Office européen
des brevets

**RAPPORT DE RECHERCHE EUROPEENNE**

Numero de la demande

EP 92 40 1574

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PATENT ABSTRACTS OF JAPAN<br>vol. 5, no. 6 (M-50)(678) 16 Janvier 1981<br>& JP-A-55 139 240 ( PIONEER )<br>* abrégé *<br>--- | 1 | B29C45/14<br>A47C7/16<br>A47C5/02 |
| A | FR-A-1 380 736 (MAGIDSON)<br>* page 1, colonne de gauche, ligne 7 - ligne 12 *<br>* page 2, colonne de droite, ligne 35 - ligne 53; figures 1,2 *<br>--- | 1,3 | |
| A | FR-A-2 450 686 (SOC. QUILLRERY)<br>* page 2, ligne 24 - page 3, ligne 22; figure 1 *<br>--- | 2 | |
| A | WO-A-9 011 878 (LIBBEY-OWENS-FORD)<br>* page 13, ligne 15 - page 14, ligne 3; figure 3 *<br>--- | 2 | |
| A | FR-A-2 208 289 (DAVID)<br>* le document en entier *<br>----- | 4,5 | |

**DOMAINES TECHNIQUES RECHERCHES (Int. Cl.5)**

B29C
A47C

Le présent rapport a été établi pour toutes les revendications

| Lieu de la recherche | Date d'achèvement de la recherche | Examinateur |
|---|---|---|
| LA HAYE | 31 AOUT 1992 | BOLLEN J.A.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P0402)